(19) Europäisches Patentamt
European Patent Office
Office européen des brevets

(11) **EP 3 188 361 A1**

(12) **EUROPEAN PATENT APPLICATION**

(43) Date of publication:
**05.07.2017 Bulletin 2017/27**

(51) Int Cl.:
*H02P 9/30* (2006.01)    *H02P 9/48* (2006.01)

(21) Application number: **16173681.4**

(22) Date of filing: **09.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.06.2015 US 201514734090**

(71) Applicant: **Hamilton Sundstrand Corporation Charlotte, NC 28217-4578 (US)**

(72) Inventors:
• **GIERAS, Jacek F.**
  **Glastonbury, CT 06033 (US)**
• **SPIERLING, Todd A.**
  **Byron, IL 61010 (US)**

(74) Representative: **Hughes, Andrea Michelle Dehns**
  **St Bride's House**
  **10 Salisbury Square**
  **London EC4Y 8JD (GB)**

Remarks:
The references to the drawing(s) no. 2a and 2b are deemed to be deleted (Rule 56(4) EPC).

(54) **VARIABLE SPEED AC GENERATOR SYSTEM INCLUDING INDEPENDENTLY CONTROLLED ROTOR FIELD**

(57) A variable speed analog current (AC) generator system includes a main generator unit (102) in electrical communication with a rotary transformer (104). The main generator unit outputs a main output power signal, and the rotary transformer adjusts a frequency of the main output power signal. The variable speed analog current (AC) generator system further includes an electronic ex-citer controller (106) in electrical communication with the rotary transformer. The exciter controller is configured to determine a desired frequency of the main output power and apply an exciter signal having an adjustable exciter frequency to maintain the main output power signal at the desired frequency.

FIG. 1

**Description**

TECHNICAL FIELD

The present inventive concept is related to generator architectures, and in particular, to generator architectures utilizing main field rotating power converters.

BACKGROUND

In the simplest terms, generators convert mechanical energy to electrical energy via the interaction of rotating magnetic fields and coils of wire. A multitude of alternating current (AC) generator systems have been developed with various means of providing interaction between magnetic fields and coils of wire. For example, an AC generator system may include an auxiliary power unit (APU) and an APU generator to provide a secondary power source to an aircraft and/or a wind turbine generator to harvest the wind energy. In this manner the AC generator system the APU, typically in the form of an independent gas turbine engine, provides a drive shaft (*i.e.*, prime mover) to drive the APU generator. Similarly, a wind turbine and associated wind turbine generator may provide power to a commercial electrical grid. The AC generator system is typically required to maintain a constant output frequency in order to properly drive electrical systems connected to the AC generator system output. However, the rotational speed of the drive shaft can vary during operation, thereby varying the respective output frequencies of the APU generator and wind turbine generator.

SUMMARY

According to a non-limiting embodiment, a variable speed analog current (AC) generator system comprises a main generator unit that outputs a main output power signal, and a rotary transformer in electrical communication with the main generator unit. The rotary transformer is configured to adjust a frequency of the main output power signal. An electronic exciter controller is in electrical communication with the rotary transformer. The exciter controller is configured to determine a desired frequency of the main output power and apply an exciter signal having an adjustable exciter frequency to the rotary transformer that maintains the main output power signal at the desired frequency.

According to another non-limiting embodiment, a method of maintaining a desired frequency of a main output power signal generated by a variable speed analog current (AC) generator system comprises outputting a main output power signal via a main generator unit. The method further includes adjusting a frequency of the main output power signal via a rotary transformer that is in electrical communication with the main generator unit. The method further includes determining a desired frequency of the main output power and applying an exciter signal having an adjustable frequency to the rotary transformer to maintain the main output power signal at the desired frequency.

BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 is an electrical schematic of a variable speed AC generator system according to a non-limiting embodiment;

FIG. 2A illustrates a rotary transformer according to a non-limiting embodiment;

FIG. 2B is a cross-sectional view of the rotary transformer of FIG. 2A taken along line A-A';

FIG. 3 is a power flow diagram of the variable speed AC generator system when operating in a subsynchronous speed mode according to a non-limiting embodiment; and

FIG. 4 is a power flow diagram of the variable speed AC generator system when operating in a super-synchronous speed mode according to a non-limiting embodiment.

DETAILED DESCRIPTION

According to at least one embodiment, a variable speed AC generator system is provided that includes a main generator unit, a rotary transformer, and an electronic exciter controller. The main generator unit includes a rotor and a stator that provides an output power having a frequency based on the excitation of the three-phase rotor and its rotational speed, shaft speed, and the number of poles. The electronic exciter controller ultimately excites the rotor with an exciter current having an adjustable frequency. That is, the electronic exciter controller controls the amount of current and the frequency at which to excite the rotor. In this manner, the electronic exciter controller monitors the output frequency of the output power provided by the three-phase stator, and adjusts the exciter frequency applied to the rotor such that the output frequency is maintained at a desired frequency. Accordingly, at least one embodiment of the disclosure provides a brushless variable AC generator system that is configured to supply AC power having a relatively constant frequency by adjusting the frequency of the transformer current to compensate for speed variations of the drive shaft.

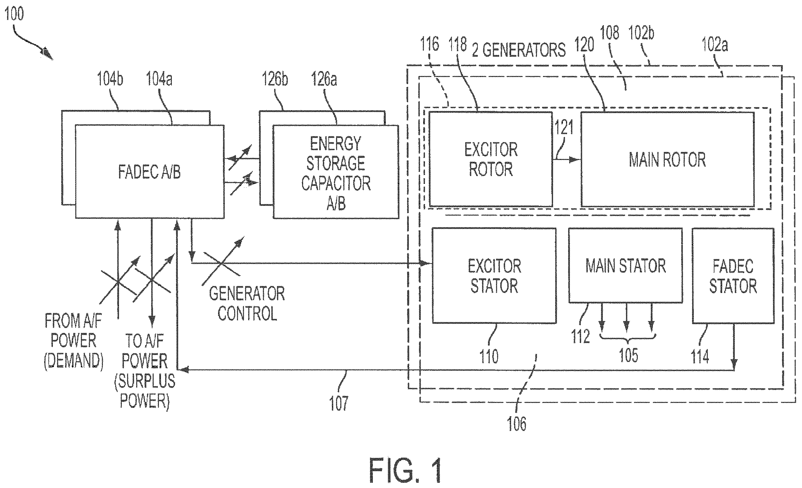

Turning now to FIG. 1, an electrical schematic of a variable speed AC generator 100 is illustrated according to a non-limiting embodiment. The variable speed AC generator 100 includes a main generator unit 102, a rotary transformer 104, an electronic exciter controller 106, and a permanent magnet (PM) machine 108. The main generator unit 102 includes a stator winding circuit 110, and a rotor field winding circuit 112. According to a non-limiting embodiment, the stator winding circuit 110 and the rotor field winding circuit 112 can be separated from each other via an air gap (not shown in FIG. 1). In addition, at least one non-limiting embodiment includes a stator circuit 110 and a rotor circuit 112 constructed as a three-phase circuit. Accordingly, the main generator unit 102 is configured to provide a three-phase output power ($P_{el\_A}$, $P_{el\_B}$, $P_{el\_C}$) in response to being excited by electromagnetic energy generated by the rotor circuit 112.

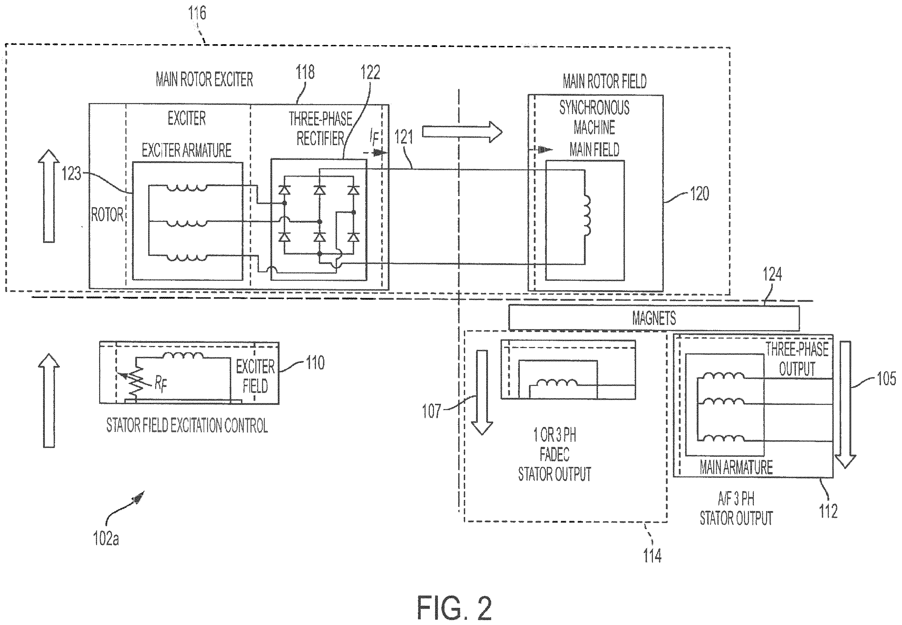

The rotary transformer 104 is interposed between the main generator unit 102 and the exciter controller 106. With reference to FIGS. 2A-2B, the rotary transformer 104 includes a stator core 114, a rotor core 116, a stator winding assembly 118 coupled to the stator core 114, and a rotor winding assembly 120 coupled to the rotor core 116. The stator core 114 is separated from the rotor core 116 via an air gap 121. The stator winding assembly 118 receives current (*i.e.,* an exciter signal) from the exciter controller 106 and generates an electromagnetic field. The rotor core 116 rotates about an axis (AX) and in proximity of the electromagnetic field generated by the stator winding assembly 118. In this manner, a current is induced in the rotor winding assembly 120 to induce an electromagnetic field, which in turn excites and energizes the rotor circuit 112 of the main generator unit 102.

The electronic exciter controller 106 is in electrical communication with the rotary transformer 104, and the PM machine 108 is in electrical communication with the exciter controller 106. In this manner, the rotary transformer windings (*i.e.,* the stator winding assembly 118 and the rotor winding assembly 120) are electrically connected to the 112 of the main generator unit 102. Accordingly, the stator frequency ($f_{mdc}$) at the main generator unit 102 that results from the shaft speed ($n$) and number of pole pairs (*pmg*) can be directly controlled by adjusting the exciter frequency ($f_c$) generated by the exciter controller 106.

According to a non-limiting embodiment, the PM machine 108 either provides power to, or absorbs power from, the exciter controller 106. The exciter controller 106 outputs an exciter current that excites and energizes the stator winding assembly 118. The exciter current is output with a variable exciter frequency ($f_c$) that is controlled by the exciter controller 106 as discussed in greater detail below. The exciter controller 106 is also configured to monitor the stator frequency ($f_{mdc}$) of the stator circuit 110, and adjust the exciter frequency ($f_c$) applied to the stator winding assembly 118 such that a desired output frequency ($f$) is maintained. According to an embodiment, the stator frequency ($f_{mdc}$) is determined based on the frequency ($f_{PM}$) of PM machine 108, which is proportional to the shaft speed ($n$). It should also be appreciated that a separate sensor (not shown) may be installed at the output of the main generator 102 which measures the output frequency ($f$) and generates a feedback signal to the exciter controller 106 indicating the measured output frequency ($f$).

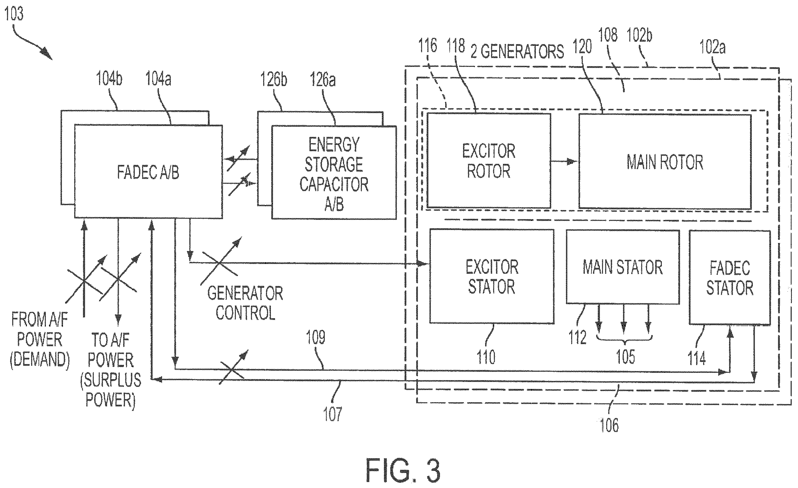

Operation of the variable speed AC generator 100 according to non-limiting embodiments will now be described with reference to FIGS. 3-4. A shaft 200 is rotatably driven at a speed ($n$) by a prime mover 202, which in turn rotationally drives the variable speed AC generator 100 and the PM machine 108. According to a non-limiting embodiment, the rotor field winding circuit 112 and the PM machine 108 are rotated synchronously with each other. The PM machine 108 is in electrical communication with the exciter controller 106 and can operate either as a generator or motor. According to a non-limiting embodiment, the variable speed AC generator 100 is completely brushless.

When the rotor of the variable speed AC generator 100 is fed with the DC power, the number of poles is $2p_{mg}$ and the shaft 200 is driven with the speed ($n$), the stator frequency ($f_{mdc}$) is defined as:

$$f_{mdc} = p_{mg}\, n \ (1).$$

When, however, the rotor is fed with AC power, the output frequency ($f$) of the output power generated by stator 110 is defined as:

$$f = f_{mdc} + f_c \quad (2),$$

where $f_c$ is the exciter frequency controlled by the exciter controller 106. This exciter frequency ($f_c$) is applied to the rotor of the variable speed AC generator 100 via rotary transformer 104, which in turn compensates for variations in the shaft speed ($n$) and thus fluctuations in the stator frequency ($f_{mdc}$).

As described above, the exciter frequency ($f_c$) is generated by a solid-state exciter controller 106. The exciter controller 106 is powered by the PM machine 108 with a frequency expressed as:

$$f_{PM} = p_{PM} n \quad (3)$$

The stator frequency ($f_{mdc}$) is proportional to the shaft speed $n$, where ($p_{PM}$) is the number of pole pairs of the PM machine 108. Thus, any change in the shaft speed ($n$) causes a noticeable change in the stator frequency ($f_{mdc}$). The exciter controller 106, therefore, is configured to adjust the exciter frequency ($f_c$) to maintain the output frequency ($f$) of the variable speed AC generator 100 at a constant desired output frequency ($f$).

The slip ($s$) of the variable speed AC generator 100 is defined as:

$$s = \frac{\dfrac{f}{p_{mg}} - n}{\dfrac{f}{p_{mg}}} \quad (4)$$

The slip ($s$) should be minimized, because the rotor electric power ($P_{er}$) (See FIGS. 2 and 3) is proportional to the slip, *i.e.,*

$$P_{er} = sP_{el} \qquad (5).$$

where ($P_{el}$) is the output electric power of the variable speed AC generator 100. Accordingly, the amount of power *(Per)* that is absorbed (or delivered) by the rotor winding of the variable speed AC generator 100 is reduced as the slip ($s$) decreases. The mechanical shaft power of the variable speed AC generator 100 is:

$$P_m = (1 - s)P_{el} \qquad (6).$$

Thus, neglecting the losses:

$$P_m + P_{er} = P_{el} \qquad (7).$$

When the slip s > 0 (positive slip), the variable speed AC generator 100 operates in subsynchronous speed mode as illustrated in FIG. 3. The prime mover 202 drives the shaft 200, which in turn drives the variable speed AC generator 100, the rotary transformer 104 and the PM machine 108. According to a non-limiting embodiment, the AC generator 100 (*e.g.*, the rotor field winding circuit 112), the rotary transformer 104 (*e.g.,* the rotor winding assembly 120), and the PM machine 108 are rotated synchronously with respect to one another. The rotary transformer 104 feeds the variable speed AC generator 100 with the frequency ($f_c$), *i.e.,* the frequency generated by the exciter controller 106, to obtain the output frequency ($f$) expressed by equation (2). A portion for the output electric power ($P_{el}$) is converted by the variable speed AC generator 100 from the mechanical power ($P_m$) and a portion (e.g., the power *(Per))* is supplied by the rotary transformer 104 from the exciter controller 106, which in turn is supplied by the PM machine 108. The prime mover 202 rotates the shaft 200 to deliver the mechanical power not only to the variable speed AC generator 100, but also to the PM machine 108 while also taking into account friction losses in the bearings of the rotary transformer 104.

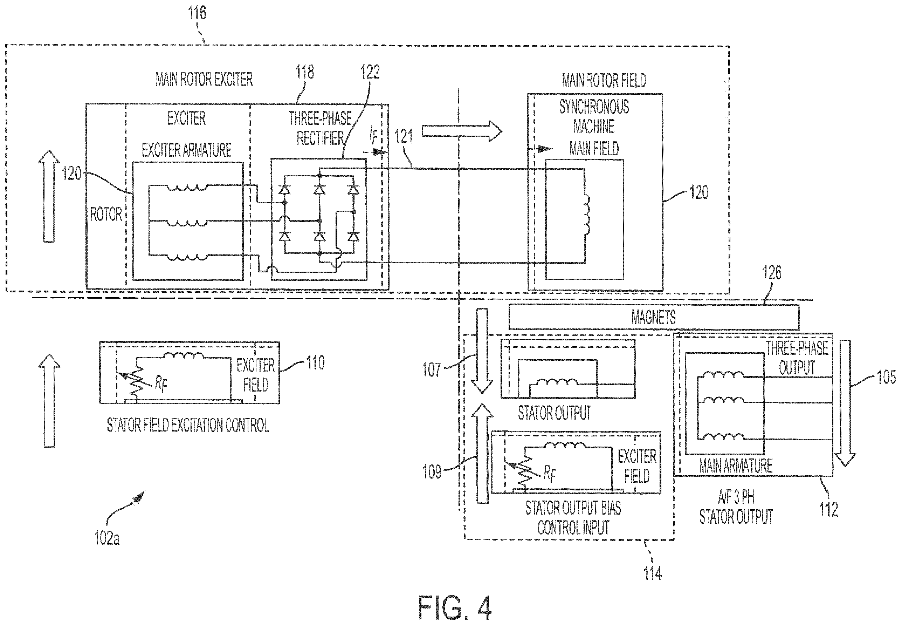

When the slip $s$ < 0 (negative slip), the variable speed AC generator 100 operates in a super-synchronous speed mode as illustrated in FIG. 4. The rotor generates the electric power ($P_{er}$), which flows from the rotor, via rotary transformer 104, to the exciter controller 106 which in turn feeds the PM machine 108 operating as a motor. The power (*Per*) in equation (7) is with the "-" sign. The shaft of the variable speed AC generator 100 is driven not only by the turbine mechanical power (*Pm)*, but also by the mechanical power (*Pmr*) delivered by the PM machine 108. The difference $P_{er}$ - $P_{mr}$ are losses in the rotary transformer 104, exciter controller 106, and PM machine 108.

As described in above, various embodiments provide a variable speed AC generator system including an independently controlled rotor field winding circuit. The variable speed AC generator system includes an electronic exciter controller that controls the amount of current and the frequency at which to excite the rotor field winding circuit. In this manner, the electronic exciter controller monitors frequency at the main generator stator, and adjusts the exciter frequency applied to the rotor field winding circuit such that the output frequency of the variable speed AC generator system is maintained at a desired frequency. Accordingly, a variable speed AC generator system according to various embodiments can increase the range on shaft (prime mover) speed variation while the output frequency is kept constant.

As used herein, the term "module" or "controller" refers to an application specific integrated circuit (ASIC), an electronic circuit, a processor (shared, dedicated, or group) and memory that executes one or more software or firmware programs, a combinational logic circuit, an electronic microcontroller, and/or other suitable components that provide the described functionality. When implemented in software, a module can be embodied in memory as a non-transitory machine-readable storage medium readable by a processing circuit and storing instructions for execution by the processing circuit for performing a method.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined by the appended claims.

**Claims**

1. A variable speed analog current (AC) generator system comprising:

   a main generator unit (102) that outputs a main output power signal;

a rotary transformer (104) in electrical communication with the main generator unit, the rotary transformer configured to adjust a frequency of the main output power signal; and

an electronic exciter (106) controller in electrical communication with the rotary transformer, the exciter controller configured to determine a desired frequency of the main output power and apply an exciter signal having an adjustable exciter frequency to the rotary transformer to maintain the main output power signal at the desired frequency.

2. The variable speed AC generator system of claim 1, wherein the rotary transformer is controlled independently from the main generator unit, and wherein the exciter controller adjusts the exciter frequency of the exciter signal based on an output frequency of the output power signal.

3. The variable speed AC generator system of claim 2, wherein the main generator unit comprises:

a stator winding circuit (110); and

a rotor field winding circuit (112) separated from the stator winding circuit via an air gap, the rotor field winding circuit generating an first electromagnetic field that electrically excites the stator winding circuit to generate the main output power signal.

4. The variable speed AC generator system of claim 3, wherein the stator circuit and the rotor circuit are each constructed as a three-phase circuit.

5. The variable speed AC generator system of claim 4, wherein the main output power signal is a three-phase output power signal.

6. The variable speed AC generator system of claim 3, wherein the rotary transformer comprises:

a stator winding assembly (118) coupled to a stator core (114); and

a rotor winding assembly (120) coupled to a rotor core (116), the rotor core being separated from the stator core.

7. The variable speed AC generator system of claim 6, wherein the stator core generates a second electromagnetic field in response to receiving the exciter signal at the stator winding assembly.

8. The variable speed AC generator system of claim 7, wherein the second electromagnetic field induces a current in the rotor winding assembly that generates a third electromagnetic field to energize the rotor circuit.

9. The variable speed AC generator system of claim 8, wherein the stator winding assembly and the rotor winding assembly are each constructed as a three-phase winding.

10. The variable speed AC generator system of claim 3, further comprising a permanent magnet machine (108) in electrical communication with the exciter controller, the permanent magnet machine generating an input power that powers the exciter controller.

11. The variable speed AC generator system of claim 10, further comprising a prime mover (202) including a drive shaft (200) that is rotatably connected to the rotor field winding circuit and the permanent magnet machine.

12. The variable speed AC generator system of claim 11, wherein the prime mover is configured to rotate the shaft such that that the rotor field winding circuit and the permanent magnet machine are rotated synchronously with each other.

13. A method of maintaining a desired frequency of a main output power signal generated by a variable speed analog current (AC) generator system, the method comprising:

outputting a main output power signal via a main generator unit;

adjusting a frequency of the main output power signal via a rotary transformer that is in electrical communication with the main generator unit; and

determining a desired frequency of the main output power and applying an exciter signal having an adjustable frequency to the rotary transformer to maintain the main output power signal at the desired frequency.

14. The method of claim 13, further comprising controlling the rotary transformer independently from the main generator unit.

15. The method of claim 14, further comprising:

generating a first electromagnetic field, via a rotor field winding circuit that is separated from the stator field winding circuit, that electrically excites a stator winding circuit to generate the main output power signal;

generating a second electromagnetic field in response to applying the exciter signal to a stator winding assembly that is coupled to a stator core, and generating a current in a rotor winding assembly via the second electromagnetic field to generate a third electromagnetic field that energizes a rotor circuit, the rotor winding assembly coupled to a rotor core that is separated from the stator core;

rotating the rotor field winding circuit and a permanent magnet machine, wherein the rotor field winding circuit and the permanent magnet machine are rotated synchronously with each other; and

adjusting an exciter frequency of the exciter signal based on an output frequency of the main output power signal.

FIG. 1

FIG. 2

EP 3 188 361 A1

FIG. 3

FIG. 4

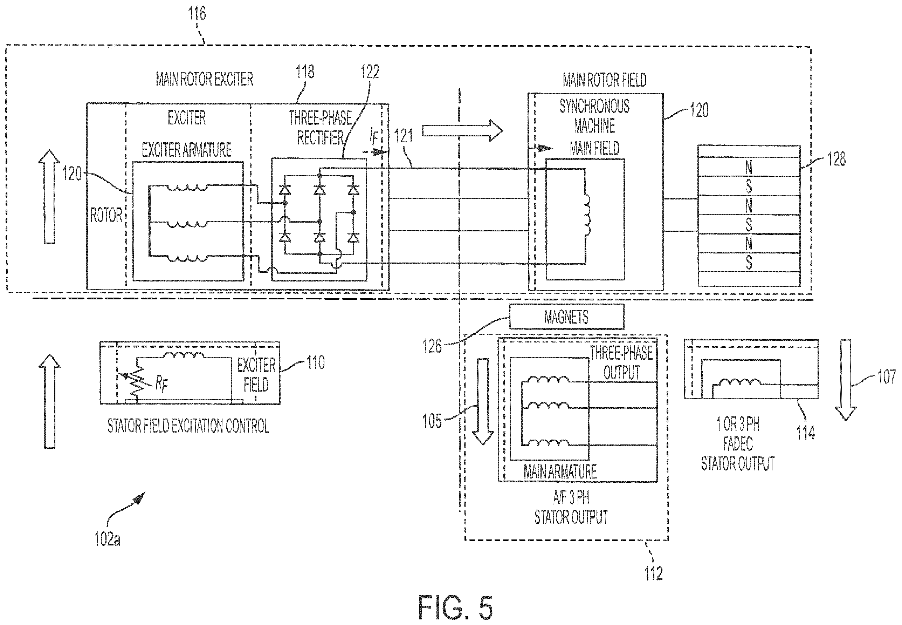

FIG. 5

Europäisches
Patentamt

European
Patent Office

Office européen
des brevets

# EUROPEAN SEARCH REPORT

Application Number

EP 16 17 3681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 2 910 739 A1 (ROLLS ROYCE PLC [GB]) 26 August 2015 (2015-08-26) * paragraphs [0036] - [0042] * * figure 3 * * claims 1, 3, 5, 6 * ----- | 1-15 | INV. H02P9/30 H02P9/48 |
| A | US 2010/295301 A1 (HUANG HAO [US] ET AL) 25 November 2010 (2010-11-25) * paragraphs [0004], [0008], [0019] * * figure 1 * ----- | 1-15 | |

**TECHNICAL FIELDS SEARCHED (IPC)**

H02P

The present search report has been drawn up for all claims

| Place of search | Date of completion of the search | Examiner |
|---|---|---|
| Munich | 29 May 2017 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 3 188 361 A1**

## ANNEX TO THE EUROPEAN SEARCH REPORT
## ON EUROPEAN PATENT APPLICATION NO.

EP 16 17 3681

29-05-2017

| Patent document cited in search report | | Publication date | Patent family member(s) | | Publication date |
|---|---|---|---|---|---|
| EP 2910739 | A1 | 26-08-2015 | EP | 2910739 A1 | 26-08-2015 |
| | | | US | 2015244296 A1 | 27-08-2015 |
| US 2010295301 | A1 | 25-11-2010 | BR | PI1009069 A2 | 01-03-2016 |
| | | | CA | 2760870 A1 | 25-11-2010 |
| | | | CN | 102428265 A | 25-04-2012 |
| | | | EP | 2432978 A2 | 28-03-2012 |
| | | | JP | 5568129 B2 | 06-08-2014 |
| | | | JP | 2012527863 A | 08-11-2012 |
| | | | US | 2010295301 A1 | 25-11-2010 |
| | | | WO | 2010135030 A2 | 25-11-2010 |